# EUROPEAN PATENT APPLICATION

(11) **EP 2 113 454 A1**
(43) Date of publication of application: **04.11.2009**
(21) Application number: 09157377.4
(22) Date of filing: 06.04.2009
(51) Int. Cl.: B62J 17/06

(54) **Leg cover structure for motorbike and motorbike adapted to mount such leg cover**

(30) Priority: 07.04.2008 IT PI20080027
(71) Applicant: EDI Progetti e Sviluppo S.a.S, 56025 Pontedera (IT)
(72) Inventor: Doveri, Marco, 56025 Pontedera (IT)
(74) Representative: Celestino, Marco

(57) **Abstract**

A leg cover (20) adapted to extend from a front motorcycle region to a rear motorcycle region of a motorcycle (10) and to partially cover a driver (2). In particular, a fastening means (30) is provided that comprise a connection portion (14) that protrudes frontally from the leg cover (20) and that is adapted to releasably engage with a respective cooperating portion (16) integral to a front motorcycle body portion (4) of the motorcycle (10). Such a leg cover (20) for a motorcycle (10) solves the problem of blocking the penetration of wind and/or rain when driving. Also a motorcycle is provided having a front body part (4) with such a cooperating portion that is made at the production of the motorcycle or it is a device that can be fixed as a retrofit to the motorcycle at said front motorcycle region forming such a cooperating portion.

## Description

### Field of the invention

The present invention relates to accessories for motorbikes and, in particular, it relates to a structure of a leg cover that can be used when driving a motorbike or the like.

Specifically, the invention is applicable to all motorcycle types, in particular scooters, and protects a motorcyclist when driving in case of bad weather and cold.

### Background of the invention

Many types are known of covers for motorcycles, also called leg covers, for protection of a motorcycle driver form cold and bad weather.

A leg cover is in substance a blanket comprising an impermeable material outside, for example nylon, and a thermally insulating material inside, for keeping a driver's body temperature. In particular, a leg cover has a front part that is connected to the front motorbike part, or shield, for example by strings, rubber bands, belts, and a rear free part that in use covers the legs and partially the torso of the driver. The mounting steps of the leg cover include tying the belts, or rubber band or strings, about the shield, and do not provide, however, further mounting elements to improve an air-tight connection with the motorbike, as explained below.

In use, when driving, the motorcyclist is sitting and has part of the body under the cover, which as said above was previously connected to the shield, in order to cover the legs and part of the torso. In some leg cover types, additional rubber bands or strings are provided such that, once the driver is sitting on the motorcycle, they are tied to a rear part of the motorcycle, for example the saddle, for keeping the leg cover steadier when driving. Furthermore, to assist the driver as well as to free the leg movements when the driver wishes to place the feet on the ground, for example when stopping the motorcycle, the leg covers has a vertical lateral cut or slit.

Concerning its structure, the leg cover has, generally, a format that follows the features of the scooter or motorbike to which it is dedicated; nevertheless, there are some universal leg covers that can fit with most of the motorbikes that are present on the market.

The known leg covers have some drawbacks such as water and/or wind that penetrates from lateral regions.

In fact, firstly, since the leg cover is connected to the motorcycle shield by means of strings or the like, which do not permit a perfect adhesion to the shield, the wind and/or the rain can penetrate inside, frustrating in part the protection that is provided by the leg cover. In particular, the aerodynamic shape of the shield conveys air and water at the discontinuity between shield and leg cover.

For overcoming this drawback, leg covers exist that cover completely the shield, avoiding this discontinuity. However, they are aesthetically poor, and must have in any case apertures to allow exposing the indicator light and the lamp light. In this case, moreover, universal or adaptable leg covers cannot be provided because, since the apertures have to fit the position of the lights, a specific leg cover for each vehicle model has to be provided.

A further drawback of the above described leg covers is that they have problems of steadiness due to the wind that hits the motorcycle when driving, with a loss of position and deformation of the leg cover that increases penetration of wind and rain and also hampers the motorcyclist when driving.

### Summary of the invention

It is an object of the present invention to provide a leg cover structure for motorbikes that blocks the penetration of wind and/or rain when driving in order to improve the prior art.

It is also a feature of the present invention to provide a leg cover structure for a motorbike that allows an easy installation and/or removal onto/from the motorcycle.

It is further feature of the invention to provide a leg cover structure for a motorbike that maintains, in use, an ideal configuration that does not hamper the motorcyclist when driving.

It is another feature of the present invention to provide a leg cover structure for a motorbike that can be fixed to a variety of types of motorbikes.

It is still an object of the present invention to provide a leg cover structure for a motorbike that is structurally easy and cheap to manufacture.

It is another feature of the present invention to provide a motorcycle for receiving such a leg cover structure.

It is a further feature of the present invention to provide a retrofit device to be mounted or fixed on a motorcycle to assist the connection of such a leg cover structure.

These and other objects are achieved by a leg cover structure for a motorcycle, comprising:
- a leg cover that is adapted to extend from a front motorcycle region to a rear motorcycle region such that it can partially cover a motorcycle driver;
- a fastening means, for fastening said leg cover to said front motorcycle region;
whose characteristic is that said fastening means comprises a connection portion that extends from said leg cover and is adapted to releasably engage with a respective cooperating portion that is integral to a motorcycle body part at said front motorcycle region, said cooperating portion extending along a portion of said motorcycle body along a predetermined path, and said connection portion has an elongated shape for engaging with said cooperating portion along said path.

In particular, two cooperating portions are provided that are arranged along opposite side body walls at said front motorcycle region, or motorcycle shield, and that are adapted to engage with two respective connection portions that extend from said leg cover. In this case, said leg cover has two connection portions that are alternated to a free edge portion that is adapted to fit about the motorcycle steering shaft.

Said cooperating portion is applicable to said motorcycle as a retrofit, or alternatively it can be provided in a new motorcycle design.

Advantageously, said leg cover has two connection portions that are alternated to a free edge portion that is adapted to fit about the motorcycle steering shaft.

Advantageously, said cooperating portion is a guide having an undercut portion in a direction that is orthogonal to said guide, and said connection portion has a shape that complementary to said cooperating portion, such that a sliding connection or extraction is allowed of said connection portion along said cooperating portion, or guide, but a connection or extraction is not allowed in a direction that is orthogonal to said guide. This way, the user can put an end of the connection portion on the guide, and to cause the connection portion to slide on the guide, up to complete the introduction. The connection portion, at the end of the introduction, remains on the shield of the front motorcycle portion, substantially in a vertical direction, preventing air or water from entering under the leg cover.

Preferably, said connection portion is an enlarged boundary portion of said leg cover and said guide has an inner channel, said enlarged boundary portion having a profiled cross section with nominal size the same as the nominal size of the inner channel of said guide. This type of connection, similar to that of sails in a sail boat, is very practical air tight and steady. This solution is also aesthetically valuable because the shield of the front motorcycle portion provides only a slit in a mainly vertical direction.

Alternatively, said connection portion is an enlarged boundary portion of said leg cover with an inner channel and said guide has a profiled protrusion, said channel having an inner profile with nominal size the same as the nominal size of the profiled protrusion of said guide.

This solution is particularly adapted to leg covers that are applicable to a motorcycle that does not have a guide already provided for in the original design. In this case, the guide can be easily applied as a retrofit to the shield, for example glued or fixed by a double sided adhesive tape.

Advantageously, said cooperating portion and/or said connection portion comprises anti-theft lock means for protecting said leg cover.

According to another aspect of the invention, a motorcycle has a front motorcycle portion, or front shield, said front motorcycle portion comprising an integrated cooperating portion that is adapted to releasably engage with a connection portion that extends from said leg cover, said cooperating portion extending along a portion of said motorcycle body along a predetermined path, and said connection portion has an elongated shape for engaging with said cooperating portion along said path.

Advantageously, said front shield is made of a first and a second shell that are fixed to each other along respective edges of a fixing line, said edges being shaped in order to form said cooperating portion when said shells are fixed to each other when assembling the motorcycle.

Alternatively, said front shield is made of a first and a second shell that are fixed to each other along respective edges of a fixing line, a profiled elongated element being provided that is adapted to connect said edges to each other when said shells are fixed to each other when assembling the motorcycle, said profiled element creating said cooperating elements.

According to another aspect of the invention, a device which can be fixed as a retrofit to a front motorcycle body part to allow a releasable connection of a leg cover to said motorcycle comprises a cooperating portion that is adapted to releasably engage with a connection portion that extends from said leg cover, said cooperating portion having a length that extends in use along a portion of said motorcycle body along a predetermined path, and said connection portion has an elongated shape for engaging with said cooperating portion along said path.

### Brief description of the drawings

The invention will be now shown with the following description of an exemplary embodiment thereof, exemplifying but not limitative, with reference to the attached drawings wherein:
- Figure 1 shows a leg cover mounted on a motorcycle, according to the prior art;
- Figure 2 shows an elevational side view of a motorcycle in which a cross section IV-IV is made for showing the cooperating portion that is adapted for the connection of the leg cover;
- Figure 2A shows an enlarged view of the cooperating portion of figure 2;
- Figure 3 shows, in detail, a first exemplary embodiment of the cooperating portion of the leg cover structure, with the relative connection portion that respectively consist of a guide and an enlarged boundary portion of the leg cover;
- Figures from 4A to 4G, according to the cross section IV-IV of figure 2, show different exemplary embodiments of the cooperating portion;
- Figure 5 shows a second exemplary embodiment, with respect to figure 3, where the connection portion has a double connection portion, according to the invention;
- Figure 6 shows a further exemplary embodiment where the fixing means between the leg cover and the front motorcycle shield comprises a dove-tail connection;
- Figure 7 shows an elevational front view of the front motorcycle shield where the cooperating portions of figure 3, according to the invention, are made;
- Figure 8 shows an enlarged view of the cooperating portions of figure 7;
- Figure 9 shows a top plan view of the leg cover with the relative connection portions, according to the invention;
- Figure 10 and the corresponding enlarged view 10A show an elevational front view of the front motorcycle shield in another exemplary embodiment of the connection by means of a zip;
- Figure 11 and the corresponding enlarged view 11A, show a further exemplary embodiment of the connection between the leg cover and the shield that can be a connection by means of Velcro;
- finally, figure 12 shows a leg cover, according to the invention, mounted on a motorcycle where cords or strings are used to block wind from the front motorcycle shield.

### Description of preferred exemplary embodiments

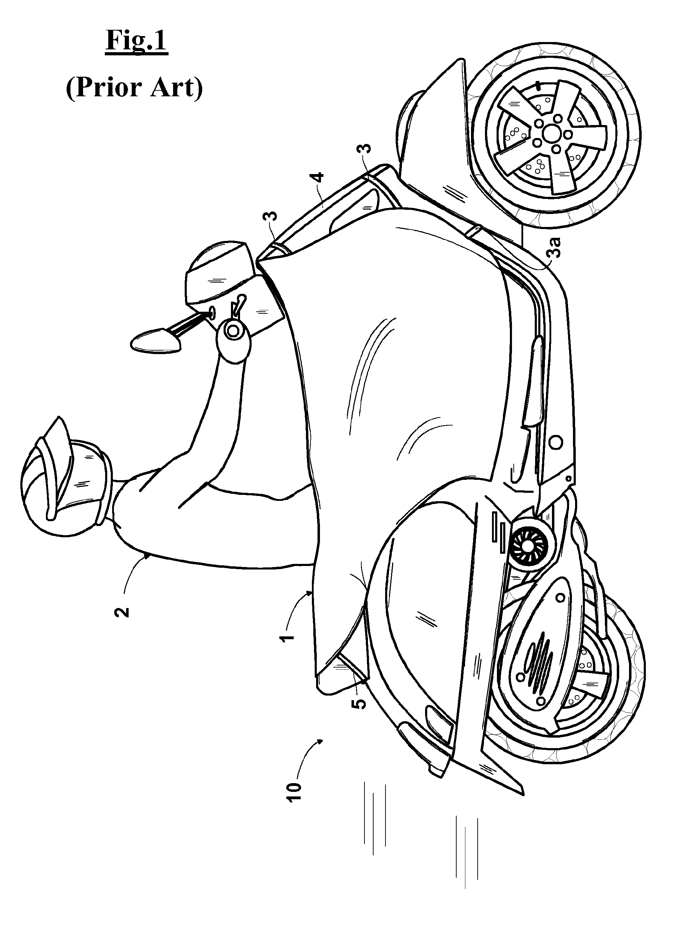

With reference to figure 1 a blanket or leg cover 1, according to the prior art, is shown that is mounted on a motorcycle 10 and is used, when driving, as protection from cold and bad weather for a motorcycle driver 2.

In particular, a leg cover 1 of known type is connected to motorcycle body part at a front motorcycle region 4, or shield, by means of strings, rubber bands, or belts 3, so that the free leg cover rear part, is adapted to cover the legs an partially the torso of driver 2. The mounting steps include then the connection of the belts, rubber band or strings 3 about the front motorcycle region that are, in certain cases, not easy to carry out and, furthermore, can affect aesthetically the motorcycle.

A further drawback of such a leg cover is that of not ensuring a perfect adhesion to the front motorcycle shield such that wind and/or rain can penetrate inside, frustrating in part the protection supplied by the leg cover.

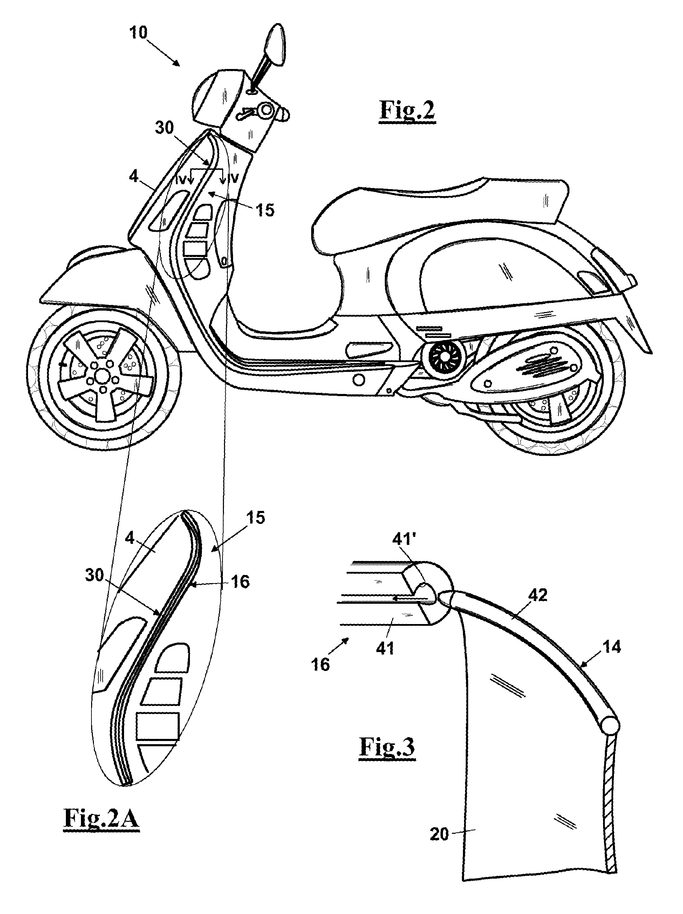

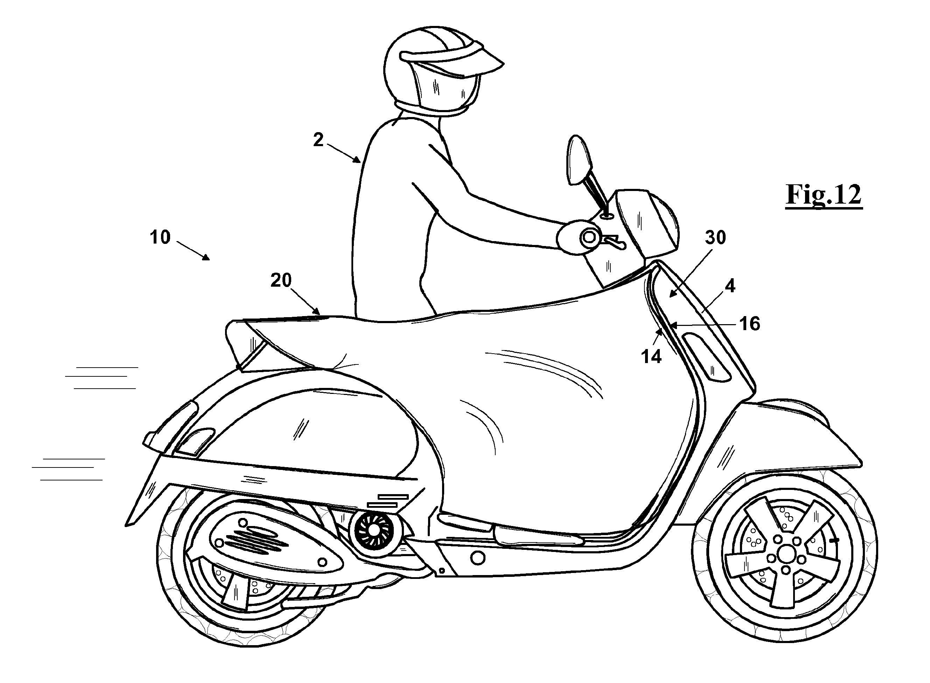

Figure 2 shows an elevational side view of motorcycle 10 in which a connection zone 15 is indicated in the front motorcycle region for a leg cover structure, according to the invention. In particular, the leg cover structure comprises a leg cover 20 (visible partially in figure 3) adapted to extend from a front motorcycle region to a rear motorcycle region 10 and to cover partially driver 2 (shown in figure 12). The structure leg cover comprises, furthermore, fastening means 30 that are adapted to fasten leg cover 20 to a front region 4 of motorcycle 10.

In particular, as shown in figure 2A, fastening means 30 comprises a connection portion 14 (visible in figure 3) that extends before leg cover 20 and adapted to releasably engage with a respective cooperating portion 16 that is integral to front region 4 of motorcycle 10. Cooperating portion 16 and the relative connection portion 14 are now described then in different exemplary embodiments.

More specifically, to obtain an appropriate protection, cooperating portion 16 extends along a motorcycle body part at said front motorcycle region 4 following a predetermined path. Similarly, connection portion 14 has an elongated shape for engaging with cooperating portion 16 along the above described path.

Figure 3 shows a first exemplary embodiment where cooperating portion 16 is a guide 41 with an undercut portion in a direction that is orthogonal to the guide, and connection portion 14 is integral to leg cover 20 and has a shape that is complementary to cooperating portion 16, such that a sliding connection or extraction is allowed of connection portion 14 along guide 41 but a connection or extraction is not allowed in a direction that is orthogonal to guide 41.

This way, the user can put an end of connection portion 14 on guide 41, and cause connection portion 14 to slide on guide 41, up to complete the introduction step. Connection portion 14, at the end of the introduction step, remains on the front shield of the body 4 (visible in figure 2 and 2A) of motorcycle 10, substantially oriented in a vertical direction, preventing air or water from entering under leg cover 20.

In particular, connection portion 14 is an enlarged boundary portion 42 of the leg cover and the guide has an inner channel 41"; the enlarged boundary portion 42 has a profiled cross section with nominal size that is the same as the nominal size of inner channel 41' of the sliding path of guide 41. This type of introduction, similar to that of sails in a sail boat, is very practical, air tight and steady. This solution is, furthermore, aesthetically significant because front shield 4 of the motorcycle presents only a vertical slit.

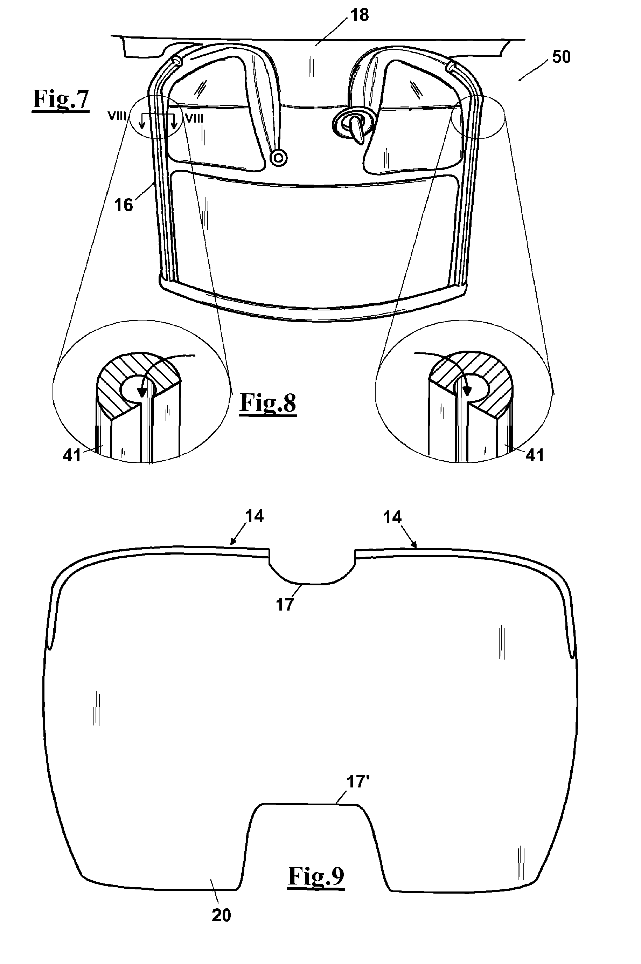

Figures from 4A to 4G show a cross sectional view of different exemplary embodiments of cooperating portion 16, which is made either as a retrofit on shield 4 or as part of a new design motorcycle. In particular, two cooperating portions 16 are provided that are arranged at opposite sides, along side body walls at said front motorcycle region or shield 4 of motorcycle 10, and that are adapted respectively to engage with two connection portions 14 that protrude from leg cover 20. In this case, leg cover 20 has two connection portions 14 between which a free edge portion 17 (visible in figure 9) engages that is adapted to fit about shaft 18 (visible in figure 7) of the steering 20 of motorcycle 10.

In particular, front body shield 4 can be made of a first and a second shell that are fixed to each other along respective edges of a fixing line, as described below and shown. In this case, the edges are shaped in order to form cooperating portion 16 when the shells are mounted with each other when assembling the motorcycle.

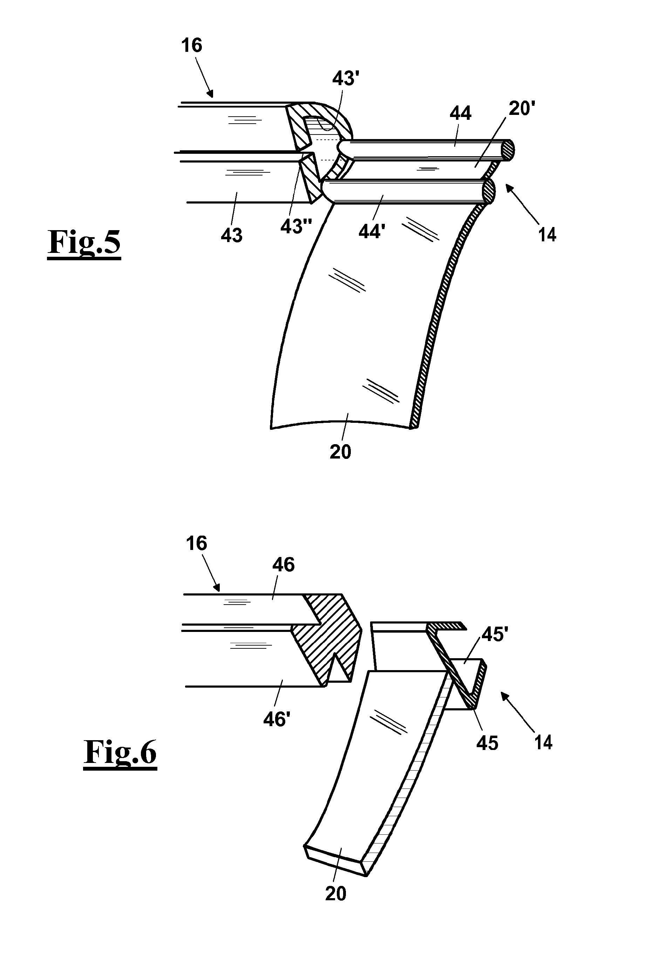

Alternatively, front body shield 4 can be made by providing a profiled elongated element, as that described in figure 5 and 6, adapted to join the edges when mounting the shells while assembling motorcycle 10; the profiled element thus forms cooperating element 16.

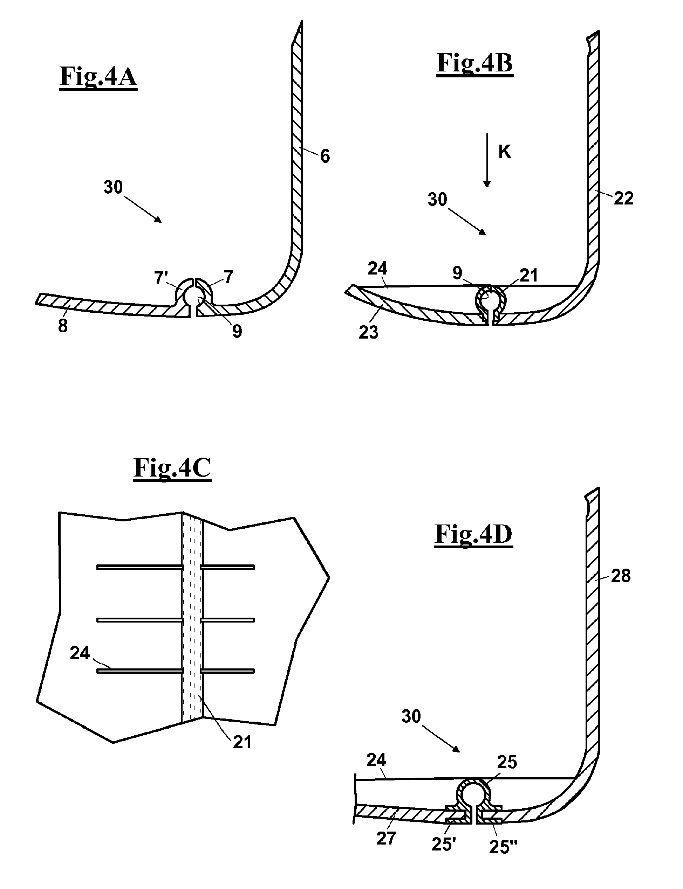

Figure 4A shows, in detail, a cross sectional view of front shield 4, which depicts fastening means 30 according to a first exemplary embodiment. In particular, the structure comprises a first 6 and second 8 portion, which form front shield 4 as well as the rear part of the shield, which have respectively a first 7 and second 7' end that substantially are C-shaped such that in an assembled configuration they form a channel 9 that embodies cooperating portion 16. This way, channel 9 and the relative connection portion 14 wherein will inserted (visible in figure 3) perform the connection of leg cover 20 to motorcycle 10. In particular, channel 9 is made within shield 4 of motorcycle 10 in order to optimizing aesthetically the means having leg cover 20.

Figure 4B shows a second exemplary embodiment in which two portions 22 and 23 are connected through a prophilic cavo 21 that represents cooperating portion 16. Furthermore, the portions 22 and 23 have ribs 24, shown in the top plan view of figure 4C, such that ensure the distance mutual between the two portions 22 and 23 as well as to allow the easy connection of connection portion 14 and still a better steadiness of extruded profile 21.

The main feature of such a structure is that the two portions 22 and 23 are different from profile 21 such that can be made with processes of moulding without problems of undercut portion.

Figure 4D shows a third exemplary embodiment in which, differently from that depicted in figure 4B, a profile 25 that is also an extruded profile, has a cross section with two connection zones 25' and 25" that are substantially C-shaped and that are adapted to engage with shield components 27 and 28. In particular, such a structure has can be mounted better with the above described shield components 27 and 28.

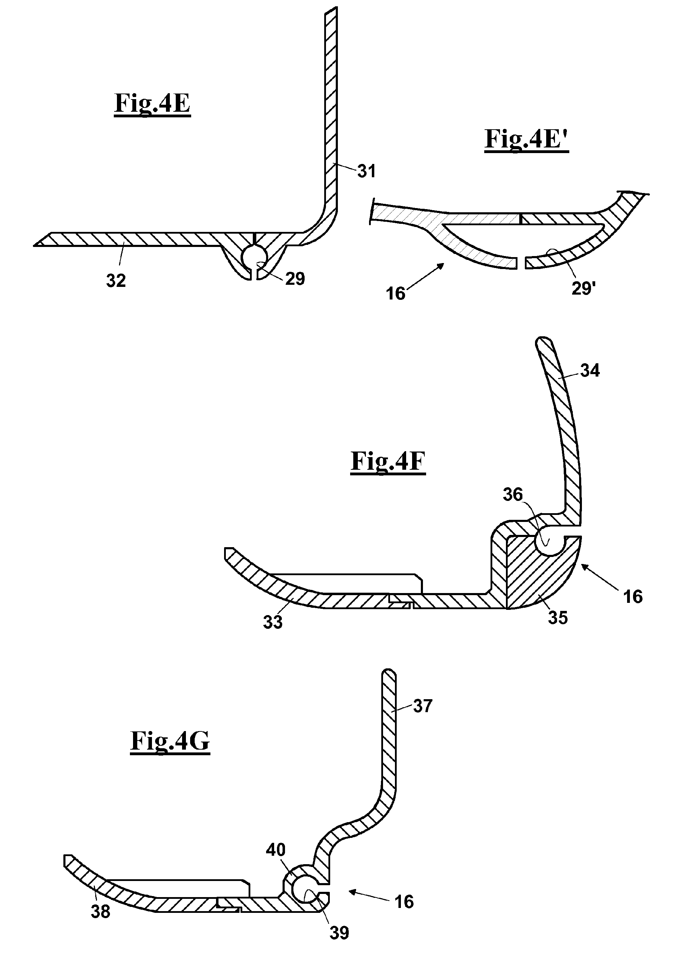

With reference to figure 4E a fourth exemplary embodiment is shown where connection channel 29 is made in same way as that of figure 4A, i.e. that connects the two motorcycle body parts at said front motorcycle region 31 and 32 with respective C-shaped end parts. In this case however, channel 29 is made externally with respect to front shield 4 of motorcycle 10 in order to assist the introduction of connection portion 14 for connecting leg cover 20.

Figure 4E' shows an alternative to exemplary embodiment of figure 4E, where the cooperating portion 16 is a channel 29' with a size that is substantially different with respect to the corresponding connection portion 14 (not shown) with which it engages. In particular, this exemplary embodiment is suitable for a connection like that shown in following figure 5.

Figure 4F shows a fifth exemplary embodiment where cooperating portion 16 is not located in the junction zone that exists between shield elements 33 and 34, but is obtained with a profile 35 that is integral to shield element 34. In such embodiment of front shield 4, profile 35, once it has been assembled it is also aesthetically valuable and easy to be mounted and/or replaced. In detail, for example, it can be mounted by a positive engagement or by a screw engagement.

Figure 4G shows, finally, a preferred exemplary embodiment where cooperating portion 16, comprising an open circle sector 40, and a connection channel 39 are provided in the design steps and are made directly on portion 37. This solution combines an excellent structural resistance and a good aesthetic effect.

According to a further exemplary embodiment (not shown) a device can be provided that can be fixed as a retrofit to the motorcycle body at said front region 4 of motorcycle 10 to allow a releasable connection of leg cover 20 to motorcycle 10. Similarly, it comprises cooperating portion 16 that is adapted to releasably engage with connection portion 14, which frontally protrudes from the leg cover. Cooperating portion 16 has a length that extends in use along a portion of the motorcycle body at said front motorcycle region 4 according to a predetermined path, and connection portion 14 has an elongated shape for engaging with cooperating portion 16 along said path.

Figures 5 and 6 show, in particular, some exemplary embodiments for a removable connection of leg cover 20 with respective cooperating portion 16.

In particular, figure 5 shows a exemplary embodiment that is similar to that of figure 3, where the connection portions are two boundary parallel enlarged portions 44 and 44' of leg cover 20, that are separated by a leg cover portion 20'. This way, each portion 44 is adapted to engage with channel 43' whereas leg cover portion 20' passes through a slit 43" so that leg cover 20 cannot be removed in an orthogonal direction. In detail, portion 44' is provided in order to prevent leg cover 20 from moving orthogonally as well as to assist the connection and extraction operations of leg cover 20 such that leg cover portion 20' that engages with slit 43" is much stiffer. This solution does not provide a connection portion 14 with a cross section that is nominally the same as the cross section of the corresponding cooperating portion 16. In this case, in fact, channel 43' can be made dimensionally independent from corresponding connection portion 14.

Figure 6, shows an exemplary embodiment that is alternative to that of figures 3 and 6, where the connection portion 16 is an enlarged boundary portion 45 of leg cover 20 having dove-tail shape, with an inner channel 45' having dove-tail shape, whereas guide 46 has a profiled protrusion 46' with a shape that is adapted to fit inner channel 45'. More specifically, channel 45' has an inner profile with nominal size the same as the nominal size of profiled protrusion 46' of sliding path 46. This solution is particularly adapted to leg covers that are applicable to motorbikes which are not equipped with the guide the original design. In this case, in fact, the guide can be easily applied as a retrofit to the shield, for example glued or fixed by a double sided adhesive tape.

All the exemplary embodiments above described can provide advantageously a cooperating portion 16 and/or a connection portion 14 that are equipped with a lock means (not shown in the figures) that can protect the leg cover 20 against possible thefts.

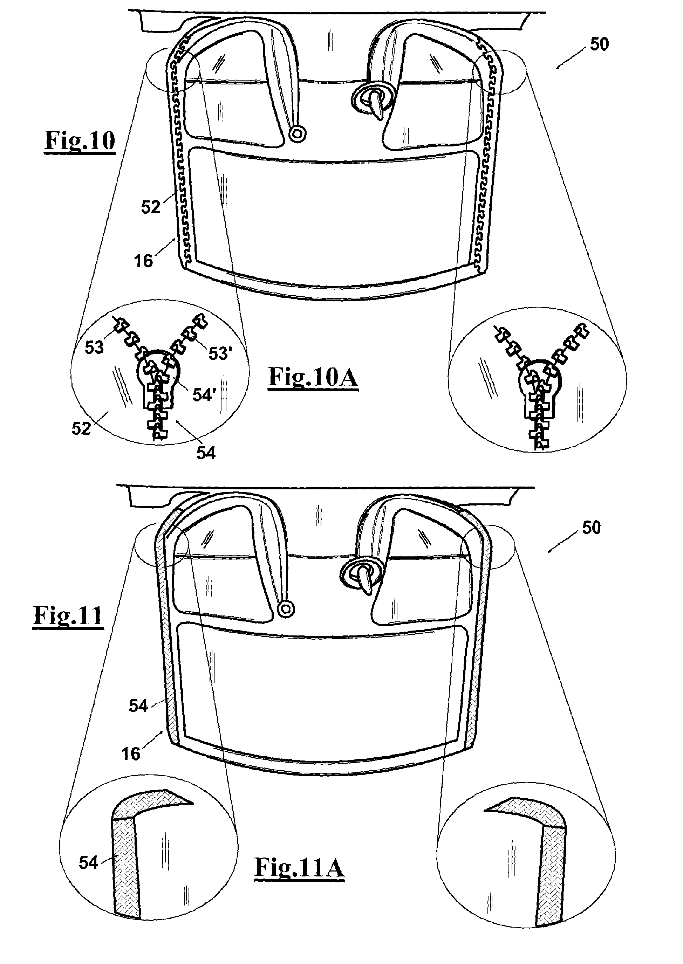

Figure 7 shows, an elevational front view of the rear part of shield 50, which shows also how integrated cooperating portion 16 extends along the edge of the shield, whereas figure 8 shows an enlarged view of cooperating portion 16 that has a connection device as a guide 41, described in figure 3, that is made on the motorcycle shield. Alternatively, the connection can be made also with the devices described in figures 5 and 6 as well as with those of figure 10 and 11, as described below.

Figure 9 shows a top plan view of leg cover 20 that comprises connection portions 14 that are made according to the devices shown in figures 5 and 6 as well as in figures 10 and 11. Concerning the shape of leg cover 20, it has a free edge portion 17 that is adapted to fit about steering shaft 18 of motorcycle 10 and a free edge portion 17' that is adapted to partially cover the torso of driver 2 (visible in figure 12) fro protection from cold and 15 bad weather.

Figure 10 and 10A show another type of connection between leg cover 20 and the rear part of motorcycle shield 50. In particular, cooperating portion 16 in this exemplary embodiment is a wing 52 of a first fixture 53 of a zip 54 that is adapted to engage with the corresponding fixture 53' that is made on leg cover 20. This way, through a pull member 54' it is possible to provide the removable fastening of leg cover 20. Such an exemplary embodiment is structurally easy and cheap and allows an easy installation and/or removal of leg cover 20.

Figures 11 and 11A show, finally, a further embodiment where the corresponding cooperating portion 16 and connection portion 14 have a Velcro fastening means 54. This solution makes the installation very easy without affecting the air-tight and reliability features of the connection.

Figure 12 shows, a motorcycle 10 having a leg cover 20, according to the invention. In particular, figure 12 shows front shield 4 that is free from cords or strings. This way, the aesthetic features and movements of motorcycle 10 are not negatively affected and the functionality of leg cover 20 and of its connection devices (shown in the previous figures), according to the invention, is more efficient and effective with respect to the prior art.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A leg cover structure for a motorcycle, comprising:
- a leg cover that is adapted to extend from a front motorcycle region to a rear motorcycle region such that it can partially cover a motorcycle driver;
- a fastening means, for fastening said leg cover to said front motorcycle region;
**characterised in that** said fastening means comprises a connection portion that extends from said leg cover and is adapted to releasably engage with a respective cooperating portion that is integral to a front motorcycle body part at said front motorcycle region, said cooperating portion extending along a portion of said motorcycle body along a predetermined path, and said connection portion has an elongated shape for engaging with said cooperating portion along said path.

2. A leg cover structure, according to claim 1, wherein two cooperating portions are provided that are arranged at opposite sides along side walls of motorcycle body part at said front motorcycle region, or shield, of said motorcycle and that are adapted respectively to engage with two connection portions that extend from said leg cover.

3. A leg cover structure, according to claim 1, wherein said leg cover has two connection portions that are alternated to a free edge portion that is adapted to fit about the motorcycle steering shaft.

4. A leg cover structure, according to claim 1, wherein said cooperating portion is a guide having an undercut portion in a direction that is orthogonal to said guide, and said connection portion has a shape that is complementary to said cooperating portion, such that a sliding connection or extraction is allowed of said connection portion along said cooperating portion but a connection or extraction is not allowed in a direction that is orthogonal to said connection portion.

5. A leg cover structure, according to claim 1 and 4, wherein said connection portion is an enlarged boundary portion of said leg cover and said cooperating portion, or guide, has an inner channel, said enlarged boundary portion having a profiled cross section with nominal size the same as the nominal size of the inner channel of said guide.

6. A leg cover structure, according to claim 1 and 4, wherein said connection portion is an enlarged boundary portion of said leg cover with an inner channel and said guide has a profiled protrusion, said channel having an inner profile with nominal size the same as the nominal size of the profiled protrusion of said guide.

7. A leg cover structure, according to claim 1, wherein said cooperating portion and/or said connection portion comprise anti-theft lock means of said leg cover.

8. A motorcycle has a front motorcycle portion, or front shield, having an integrated cooperating portion that is adapted to releasably engage with a connection portion that extends from said leg cover, said cooperating portion extending along a portion of said motorcycle body along a predetermined path, and said connection portion has an elongated shape for engaging with said cooperating portion along said path.

9. A motorcycle, according to claim 8, wherein said front shield is made of a first and a second shell that are fixed to each other along respective edges of a fixing line, said edges being shaped in order to form said cooperating portion when said shells are fixed to each other when assembling the motorcycle.

10. A motorcycle, according to claim 8, wherein said front shield is made of a first and a second shell that are fixed to each other along respective edges of a fixing line, a profiled elongated element being provided that is adapted to connect said edges to each other when said shells are fixed to each other when assembling the motorcycle, said profiled element creating said cooperating elements.

11. A device which can be fixed as a retrofit to a front motorcycle body part to allow a releasable connection of a leg cover to said motorcycle, said device comprising a cooperating portion that is adapted to releasably engage with a connection portion that extends from said leg cover, said cooperating portion having a length that extends in use along a portion of said motorcycle body part along a predetermined path, and said connection portion has an elongated shape for engaging with said cooperating portion along said path.
